# EUROPEAN PATENT APPLICATION

(11) **EP 1 900 293 A1**
(43) Date of publication of application: **19.03.2008**
(21) Application number: 06119856.0
(22) Date of filing: 31.08.2006
(51) Int. Cl.: A23L 1/226, A23L 1/227, A23L 1/228, A23L 1/22

(54) **A cooking aid composition obtained through thermal processing**

(71) Applicant: Nestec S.A., 1800 Vevey (CH)
(72) Inventor: Labrunie, Thierry, 68510 Koetzingue (FR); Fichtel, Heidrun, 78247 Hilzingen (DE); Mayer, Christel, 8307 Effretikon (CH)
(74) Representative: Thomas, Alain

(57) **Abstract**

The invention concerns a cooking aid composition comprising Maillard reaction products together with taste enhancement property compounds without added MSG and Ribonucleotides, wherein the taste enhancement property compounds are organic acids and/or amino acids taken from the group consisting of acetic acid, citric acid, fumaric acid, malic acid, tartaric acid, succinic acid, ascorbic acid, aspartic acid, fumaric acid and the salts thereof alone or in combination.

## Description

The present invention concerns a cooking aid composition obtained through thermal process with flavour enhancement characteristics.

On the market to-day, there are already products, which have both a good aroma and taste enhancement properties. These products may contain added MSG and/or Ribonucleotides for giving to the final product the above mentioned properties. When they do not contain added MSG and/or Ribonucleotides, it is rather hydrolysates and/or yeast extracts which might be added.

The objective of the present invention is to have a cooking aid composition without added MSG and Ribonucleotides and which is based on thermal process technology combined with organic acids with taste enhancement properties.

The present invention concerns a cooking aid composition comprising Maillard reaction products together with taste enhancement property compounds taken in the group consisting of organic acids, amino acids, the salts thereof, alone or in combination, without added MSG and Ribonucleotides.

The cooking aid composition of the invention contains taste enhancement property compounds, which are organic acids and/or amino acids. These compounds are taken from the group consisting of acetic acid, citric acid, fumaric acid, malic acid, tartaric acid, succinic acid, ascorbic acid, aspartic acid, fumaric acid and the salts thereof alone or in combination. The organic acid and/or amino acids components are not exclusively in the acid form, but partially in the form of their salt since the pH of the cooking aid composition may be adjusted to about 6 to 8, preferably near to 7.

The cooking aid composition of the invention contains further yeast extract and/or hydrolysate. Under hydrolysate, we understand cereal hydrolysates, meat hydrolysates or fish hydrolysates. The type of meat is not critical and can be any type of meat, like beef, chicken, porc, lamb, mouton and others. The type of cereal is not critical and can be any type of cereal, like wheat, corn, barley and others. The composition can also contain meat and/or vegetable extract.

In the cooking aid composition of the invention, the Maillard reaction products are obtained by a thermal reaction between reducing sugars and amino acids added and/or from protein sources.

The amino acids used can be any type of amino acids. Preferably, the amino acids are thiamine, cysteine. The amino acids from protein sources are taken from extracts and/or hydrolisates taken from the group consisting of chicken , meat ,fish and vegetable . The type of meat , fish and vegetable are not critical and can be any type of meat, fish and vegetable.

The reducing sugars can be of any type known by the man skilled in the art. Preferably, the reducing sugar is glucose.

The cooking aid composition of the invention can contain further any kind of mineral salts. Preferably, these salts are taken from the group consisting of mineral salts of sodium, potassium, iron, calcium and magnesium. The salts can be of any type , like chloride.

The composition of the invention can also contain a non-starch polysaccharide, like xanthan , β-glucan or others. The non-starch polysaccharide allows a good mouth coating.

The composition of the invention finally, can also contain maltodextrine and/or starch. This type of ingredient allows an adjustment of the viscosity according to the way of drying used.

The present invention concerns further a process for the preparation of the cooking aid composition described above, wherein
- an aqueous solution of organic acids/salts and/or amino acids taken from the group consisting of acetic acid, citric acid, fumaric acid, malic acid, tartaric acid, succinic acid, ascorbic acid, aspartic acid, fumaric acid is prepared to reach a pH comprised between 6 and 8,
- yeast extracts, hydrolisates, reducing sugars, amino acids and the mineral salts are mixed with the preceding mixture to carry out a thermal reaction and
- the reaction mixture is dried.

There are at least 4 possibilities to obtain the above mentioned solution of salts. The first possibility is to use an aqueous solution of 100 % of the salts derived from the above mentioned organic acids and/or amino acids. The important for all the possibilities is to reach a pH between 6 and 8. The second possibility is to have a mixture of organic acids and/or amino acids with a certain amount of salts of the above mentioned organic acids and/or amino acids, without any need to add sodium hydroxide or chlorhydric acid. The third possibility is to have the same mixture as before , but with the addition of sodium hydroxide or chlorhydric acid to reach the required pH. As already said before, the objective is to reach for the solution a pH comprised between 6 and 8. The fourth possibility is to have 100 % of the organic acids with the corresponding amount of sodium hydroxide to reach the above mentioned pH. Any further combination of organic acids/salts and/or amino acids with a base or an acid allowing to reach the target pH is comprised in the scope of the invention.

The conditions of the thermal reaction is known per se and said reaction is carried out according to features known by the man skilled in the art of Maillard reaction processing.

As said before, it is also possible to add after the Maillard reaction and before drying a maltodextrine and/or starch for viscosity adjustment.

Depending of the way of drying, like spray-drying, vacuum drying, belt drying, the viscosity might be adjusted previously to processing. Maltodextrine and/or starch might be used after the Maillard reaction as texturiser.

After the drying , as already mentioned above, it is also possible to add to the obtained powder a non-starch polysaccharide, like xanthan , β-glucan or others. The non-starch polysaccharide allows a good mouth coating. The composition according to the invention can be used per se, like a condiment, which is directly sprinkled on a corresponding food product.

The composition can also be added in the culinary area. Under culinary area, we understand dry culinary, like soup, fixes, sauces and others; wet culinary, like mayonnaise, dressings, sauces and others; culinary chilled and frozen products, like pizzas, ready meals and others.

The following of the description is now made in relation with an example.

### Example

2.5 kg of fumaric acid is mixed with 2 kg of succinic acid and 20 kg of water containing NaOH for adjusting the pH at around 7. 28 kg of yeast extract, 10 kg of protein hydrolysate, 10 kg of sodium chloride and 2 kg of glucose is mixed with the preceding product. A thermal reaction is carried out during 2 hours. The viscosity is adjusted with maltodextrine. The obtained product is dried by vacuum drying and the obtained cake is milled and mixed with xanthan.

The product is ready to be used and is added in a mixture for dehydrated soup : 10 g of the cooking aid composition is added to 90 g of dehydrated soup.

## Claims

1. A cooking aid composition comprising Maillard reaction products together with taste enhancement property compounds taken in the group consisting of organic acids, amino acids, the salts thereof, alone or in combination, without added MSG and Ribonucleotides.

2. A cooking aid composition according to claim 1, wherein the taste enhancement property compounds are organic acids and/or amino acids taken from the group consisting of acetic acid, citric acid, fumaric acid, malic acid, tartaric acid, succinic acid, ascorbic acid, aspartic acid, fumaric acid and the salts thereof alone or in combination.

3. A cooking aid composition according to any of claims 1 or 2, wherein said composition contains further a compound taken from the group consisting of yeast extract, cereal hydrolisate, meat hydrolisate, fish hydrolisate, vegetable hydrolisate, meat extract, vegetable extract, fish extract, alone or in combination.

4. A cooking aid composition according to any of claims 1 to 3, wherein the Maillard reaction products are obtained by a reaction between reducing sugars and amino acids added and/or from protein sources.

5. A cooking aid composition according to claim 4, wherein the amino acids from protein sources are taken from extracts and/or hydrolisates taken from the group consisting of chicken , meat , fish and vegetable.

6. A cooking aid composition according to any of claims 1 to 5, wherein it contains further mineral salts.

7. A cooking aid composition according to any of claims 1 to 6, wherein it contains further a non-starch polysaccharide taken from the group consisting of xanthan, β-glucan and others.

8. A cooking aid composition according to any of claims 1 to 7, wherein it contains further maltodextrine and /or starch.

9. A process for the preparation of a cooking aid composition according to any of claims 1 to 8, wherein
- an aqueous solution of organic acids/salts and/or amino acids taken from the group consisting of acetic acid, citric acid, fumaric acid, malic acid, tartaric acid, succinic acid, ascorbic acid, aspartic acid, fumaric acid is prepared to reach a pH comprised between 6 and 8,
- yeast extract, hydrolisates, reducing sugars, amino acids and the mineral salts are mixed with the preceding mixture to carry out a thermal reaction and
- the reaction mixture is dried.

10. A process according to claim 9, wherein maltodextrine and/or starch is added before the drying.

11. A process according to claims 9 or 10 , wherein a non-starch polysaccharide is added to the powder after the drying.

12. The use of the cooking aid composition according to any of claims 1 to 8, wherein said composition is used as an ingredient per se.

13. The use of the cooking aid composition according to any of claims 1 to 8, wherein said composition is added in the culinary area.
